# EUROPÄISCHE PATENTSCHRIFT

(11) **EP 3 320 406 B1**
(45) Veröffentlichungstag und Bekanntmachung des Hinweises auf die Patenterteilung: **14.08.2019**
(21) Anmeldenummer: 15775646.1
(22) Anmeldetag: 21.09.2015
(51) Int. Cl.: G05B 19/418, G06F 9/50

(54) **FREIGABE EINES VERARBEITUNGSSCHRITTES FÜR EIN VERARBEITUNGSOBJEKT**
ENABLING A PROCESSING STEP FOR AN OBJECT TO BE PROCESSED
VALIDATION D'UNE ÉTAPE DE TRAITEMENT D'UN OBJET À TRAITER

(43) Veröffentlichungstag der Anmeldung: 16.05.2018
(73) Patentinhaber: Siemens Aktiengesellschaft, 80333 München (DE)
(72) Erfinder: BEYER, Dagmar, 80339 München (DE); HEINTEL, Markus, 81377 München (DE)
(86) Internationale Anmeldenummer: PCT/EP2015/071589
(87) Internationale Veröffentlichungsnummer: WO 2017/050348

(56) Entgegenhaltungen:
- US-B1- 6 647 300

## Beschreibung

Die vorliegende Erfindung betrifft ein Verfahren sowie eine Anordnung zur Freigabe eines Verarbeitungsschrittes für ein Verarbeitungsobjekt, wobei auf Basis von Geboten für den Verarbeitungsschritt ein Verfügbarkeitsergebnis ermittelt wird, welches eine Verfügbarkeit des Verarbeitungsschrittes anzeigt.

Die US 6,647,300 B1 beschreibt ein verteiltes Steuerungssystem, bei welchem autonome miteinander kooperierende Einheiten mittels Geboten und Gegengeboten in Verbindung stehen, um die Produktion eines Produkts untereinander zuzuteilen.

In Automatisierungsanlagen mit einer Vielzahl von Produktionseinheiten oder Fertigungseinheiten oder Maschinen und zur Abarbeitung einer Vielzahl von Verarbeitungsschritten kommen zunehmend flexible, dezentrale, selbstorganisierende und werkstückzentrierte Produktionssysteme zum Einsatz. Beispielsweise kommen sogenannte Cyber Physical Production Systems, oder kurz CPPS, zum Einsatz. In solchen Systemen steuert das Werkstück seinen Produktionsablauf selbstständig. Für diese selbstständige Steuerung ist es nötig, dass Produktionsressourcen, wie beispielsweise der Service oder die Funktionalität einer Fertigungsmaschine oder deren Belegung zur Durchführung eines Verarbeitungsschrittes in einer Fertigungsstraße inklusive des zur Durchführung des Verarbeitungsschrittes benötigten Materials oder Betriebsmittels den einzelnen Werkstücken sinnvoll zugewiesen werden. Somit wird die Ressourcenallokation oder Ressourcenzuweisung vom Werkstück selbst getrieben.

In einer Automatisierungsanlage mit einem Industrienetzwerk, welches insbesondere mit einem Büro- oder IT-Netzwerk gekoppelt ist, soll ein missbräuchlicher Zugriff auf Ressourcen verhindert werden. Unter Ressourcen sind beispielsweise Produktionsservices, die von Produktionseinheiten, wie Robotern, Förderanlagen, CNC-Maschinen usw., oder untergelagerten Produktionsteilsystemen für einen Produktionsschritt bereitgestellt werden, zu verstehen, Datenservices oder der Verbrauch von Betriebsmitteln während der Durchführung von Produktionsschritten durch Produktionseinheiten. Ein Verarbeitungsschritt in einer Produktion benötigt eine oder mehrere Ressourcen. Zugriffsregeln, welche einen missbräuchlichen Zugriff einzelner Verarbeitungsobjekte auf Ressourcen verhindern sollen, können statisch definiert werden. Für ein Szenario wie in einem Cyber Physical Production System, in welchem eine flexible Steuerung des Produktionsablaufes durch das Werkstück selbst erfolgen soll, ggf. unter Berücksichtigung anderer Werkstücke oder anderer Kenngrößen der Produktionsanlage, sind statisch definierte Zugriffsregeln nicht verwendbar.

Für eine dynamische Vergabe von Zugriffsrechten auf Ressourcen ist es allgemein bekannt, durch eine zentrale Produktionsplanung und Produktionssteuerung eine Ressourcenallokation vorzulagern. Somit ist zwar eine gewisse dynamische Zuordnung und somit die Berücksichtigung von Gegebenheiten oder Änderungen in der Automatisierungsanlage möglich, jedoch lediglich durch eine zentrale Einheit, welche jeweils im Voraus für einen gewissen Zeitraum die Ressourcen verteilen kann.

Produktionsanlagen werden somit durch das Engineering weitgehend statisch geplant und es ist beispielsweise der Ablauf der Produktionsschritte durch die Anlage fest vorgegeben. Dies ist beispielsweise bei einer festen Produktionsstraße der Fall. Ebenso kann beispielsweise durch ein Manufacturing Execution System, kurz MES, der Produktionsablauf für die einzelnen Werkstücke zentral vorgeplant werden. Beispielsweise konfiguriert das MES die einzelnen Produktionseinheiten oder Produktionseinheiten entsprechend des Plans. Beispielsweise wird auf einer Fräse ein bestimmtes Zeitfenster für die Produktion eines bestimmten Werkstückes eingeplant.

Vor diesem Hintergrund ist es Aufgabe der vorliegenden Erfindung, für ein dezentrales oder werkstückzentriertes Produktionssystem ein verbessertes und manipulationsgeschütztes Verfahren sowie eine Anordnung bereitzustellen, welche eine Ressourcenallokation in einer Produktionsanlage ermöglichen.

Diese Aufgabe wird durch den Gegenstand der unabhängigen Patentansprüche gelöst. Vorteilhafte Weiterbildungen und Ausgestaltungen sind in den abhängigen Ansprüchen angegeben.

Die Erfindung betrifft ein Verfahren zur Freigabe eines Verarbeitungsschrittes für ein Verarbeitungsobjekt mit zugewiesenem Guthaben, aufweisend die folgenden Schritte:
- Ermitteln eines Verfügbarkeitsergebnisses mittels eines Prozessors, wobei das Verfügbarkeitsergebnis anhand einer Anfrage des Verarbeitungsobjektes mit einem Gebot für den Verarbeitungsschritt, anhand von weiteren Anfragen weiterer Verarbeitungsobjekte für den Verarbeitungsschritt und von zu den weiteren Anfragen gehörigen weiteren Geboten und anhand eines Angebotes einer Produktionseinheit geeignet zur Durchführung des Verarbeitungsschrittes ermittelt wird, wobei das Gebot einen Teilbetrag des dem Verarbeitungsobjekt zugewiesenen Guthabens darstellt;
- Freigeben des Verarbeitungsschrittes bei einer Fertigungsschrittanfrage des Verarbeitungsobjektes gegen Reduktion des Guthabens um das Gebot, falls das Verfügbarkeitsergebnis eine Verfügbarkeit anzeigt.

Unter einem Verarbeitungsobjekt wird beispielsweise ein Werkstück oder ein Werkstückträger oder eine Charge verstanden. Das Verarbeitungsobjekt wird durch die Produktionseinheit in einer beliebigen Form verarbeitet. Es handelt sich also um ein zu ver- oder bearbeitendes Objekt. Beispielsweise wird ein physikalisches Objekt von einer Fertigungseinheit bearbeitet, z.B. beschichtet. Oder es wird ein Ausgangsstoff, beispielsweise ein Fluid, verarbeitet, beispielsweise erhitzt oder komprimiert, usw. Es kann sich ferner um einen Werkstückträger handeln, der den Verarbeitungsschritt anfragt. Unter einem Verarbeitungsschritt wird beispielsweise ein Produktionsschritt innerhalb einer Abfolge von Produktionsschritten zur Herstellung eines veredelten Werkstückes verstanden. Beispielsweise handelt es sich bei dem Verarbeitungsschritt um eine Bearbeitung des Materials des Werkstücks oder um das Bereitstellen einer Produktkomponente, wie beispielsweise einer Schraube, für das Werkstück. Ebenso kann es sich um einen Fertigungsschritt für die Bearbeitung eines Werkstückträgers handeln, beispielsweise eine Anpassung der Form oder Temperatur eines Werkstückträgers für einen nachfolgenden Produktionsschritt des Werkstücks. Es handelt sich insbesondere um ein Herstellungsverfahren eines Produktes. Das Produkt kann als Werkstück in den verschiedenen Phasen des Fertigungs-, Bearbeitungs- oder Verarbeitungsprozesses sein und es kann sich bei dem Werkstück insbesondere um ein Ausgangs-, Zwischen- oder Endprodukt handeln. Ebenso ist das Verfahren bei Prozessschritten in einer Chargenproduktion anwendbar, welche durch eine Produktionseinheit durchgeführt werden.

Unter einer Anfrage des Verarbeitungsobjektes ist beispielsweise das Senden einer Nachricht oder Information oder von Daten ausgehend von dem Verarbeitungsobjekt zu verstehen. Insbesondere verfügt ein Verarbeitungsobjekt über eine Funkschnittstelle zu dem Prozessor oder zu einer Vorrichtung, auf welcher der Prozessor vorgesehen ist. Über diese Funkschnittstelle wird beispielsweise das Gebot für den Verarbeitungsschritt übermittelt. Unter einem Gebot ist eine Information zu verstehen, welche beispielsweise einen Betrag in einer beliebigen Währung, insbesondere fiktiven Währung, angibt. Das Verarbeitungsobjekt, beispielsweise das Werkstück oder der Werkstückträger, setzt somit - ähnlich wie bei einer Auktion - einen bestimmten Betrag in einer Währung, welche beispielsweise innerhalb der gesamten Automatisierungsanlage, in welcher das Werkstück bearbeitet wird, einheitlich und fest vorgegeben ist. Die Anfrage kann ferner durch den digitalen Zwilling des Verarbeitungsobjektes erstellt werden. Der digitale Zwilling oder das digitale Abbild des Endproduktes enthält beispielsweise die Information über das Guthaben, das für den gesamten Produktionsprozess zur Verfügung steht und bietet auf die Verarbeitungsschritte. Dies ist insbesondere vorteilhaft für Szenarien, in denen ein Verarbeitungsobjekt aufgrund der physikalischen Ausgestaltung nicht geeignet ist, eine Schnittstelle aufzuweisen. Beispielsweise ist das Anbringen eines Transponders oder Chips für den Einsatz von Near-Field-Communication-Verfahren für ein Werkstück oder einen Werkstückträger zwar gut realisierbar, für ein Stoffgemisch jedoch nicht möglich. Insbesondere für diese Fälle kann die Anfrage vorteilhaft mittels des digitalen Zwillings des Verarbeitungsobjektes durchgeführt werden.

Die gewählte Währung stellt eine Metrik dar, anhand welcher die verschiedenen Gebote der verschiedenen Verarbeitungsobjekte innerhalb einer Produktionsanlage zueinander in Beziehung gesetzt werden. Das dem Verarbeitungsobjekt zugewiesene Guthaben ist für das Gebot immer limitierend, d.h. das Gebot kann nicht einem größeren Wert entsprechen, als das gesamte Guthaben. Die Verwaltung des Guthabens kann durch ein zentrales Konto erfolgen. Ferner können Technologien für dezentrale Kryptowährungen, wie beispielsweise Bitcoin-Verfahren, verwendet werden, die zugleich eine verlässliche Transaktion gewährleisten.

Das Verfügbarkeitsergebnis stellt ein Ergebnis einer Auktion der auf den Verarbeitungsschritt bietenden Verarbeitungsobjekte dar. Das Verfügbarkeitsergebnis kann somit eine Verfügbarkeit des Verarbeitungsschrittes für ein Verarbeitungsobjekt anhand dessen Gebotes anzeigen, das heißt anzeigen, dass das Gebot des Werkstückes oder Werkstückträgers oder der Charge oder des digitalen Zwillings dieser Objekte im Vergleich zu anderen vorliegenden Geboten anderer Verarbeitungsobjekt ausreichend hoch war. Als Metrik kann insbesondere ein Maßsystem zugrunde gelegt werden, bei welchem mit steigender Höhe eines Betrages, also des Gebotes, der Einfluss bei der Auktion steigt. Das heißt ein höherer Betrag überbietet einen niedrigeren Betrag.

Die Produktionseinheit, deren Verarbeitungsschritt angefragt wird, liefert selbst ein Angebot ab, zu welchem der Verarbeitungsschritt zur Verfügung gestellt werden kann. Dieses kann beispielsweise sehr niedrig gewählt werden, falls die Ressourcen zur Durchführung des Verarbeitungsschrittes für die Produktionseinheit ausreichend zur Verfügung stehen. Alternativ kann die Produktionseinheit bereits einen sehr hohen Betrag als Angebot wählen, um einen Verarbeitungsschritt für Verarbeitungsobjekte vorzuhalten, welche dem Verarbeitungsschritt eine hohe Priorität zuweisen. Das Verfügbarkeitsergebnis kann beispielsweise sowohl dem Verarbeitungsobjekt als auch der Produktionseinheit bereitgestellt werden. Beispielsweise wird das Verfügbarkeitsergebnis einem Werkstück über die Funkschnittstelle des Werkstücks übermittelt.

Wenn das Verfügbarkeitsergebnis anzeigt, dass eine Verfügbarkeit für das Verarbeitungsobjekt für den gewünschten Verarbeitungsschritt besteht, das heißt, dass das Gebot ausreichend gegenüber den Geboten anderer Verarbeitungsobjekt war, so wird bei einer Verarbeitungsschrittanfrage des Verarbeitungsobjektes der Verarbeitungsschritt freigegeben. Beispielsweise fragt das Werkstück direkt bei der Produktionseinheit nach dem Verarbeitungsschritt an und die Produktionseinheit gewährt den Zugriff auf den Verarbeitungsschritt auf Basis des Verfügbarkeitsergebnisses. Beispielsweise hat die Produktionseinheit das Verfügbarkeitsergebnis selbst vorliegen oder erhält das Verfügbarkeitsergebnis von dem Werkstück gemeinsam mit der Verarbeitungsschrittanfrage.

In einer Ausführungsform fallen die Anfrage mit dem Gebot und die Verarbeitungsschrittanfrage zusammen. D.h. es wird gemeinsam mit dem Einleiten des Auktionsschrittes auch zugleich der Schritt ausgelöst, der das Guthaben reduziert, falls die Auktion erfolgreich war.

Im Gegenzug zu der Freigabe wird das Guthaben des Verarbeitungsobjektes um den Betrag des Gebotes reduziert. Ein Gebot kann immer nur ein Teilbetrag des dem Verarbeitungsobjekts zugewiesenen Guthabens darstellen. Von einem Gesamtguthaben, welches beispielsweise für den gesamten Fertigungsprozess für ein Werkstück vorgesehen ist, kann das Werkstück selbstständig Beträge für ein jeweiliges Gebot aufwenden. Das anfangs vorhandene Gesamtguthaben ist somit die Obergrenze für die Summe ablieferbarer Gebote.

Somit kauft sich das Verarbeitungsobjekt die erforderlichen Produktionsdienste auf vorteilhafte Weise selbstständig ein. Beispielsweise erfolgt das Ermitteln des Verfügbarkeitsergebnisses mittels eines Prozessors, der als Marktplatz oder Auktionsplattform dient. Anstelle von festgelegten Produktionsressourcen, die im Voraus fest für ein Verarbeitungsobjekt vorgesehen sind und vergeben werden, wird dem Verarbeitungsobjekt also ein festes Guthaben, das es für die Produktion nutzen kann, zugewiesen. Dadurch wird die Menge der Produktions- oder Fertigungsressourcen, beispielsweise die Anzahl an verschiedenen Verarbeitungsschritten oder die Häufigkeit von Verarbeitungsschritten, die ein Verarbeitungsobjekt verbrauchen kann, effektiv nach oben begrenzt. Das Bezahlen für einen Verarbeitungsschritt erfolgt durch die Verarbeitungsschrittanfrage, bei der das verfügbare Guthaben um das abgegebene Gebot reduziert wird und im Gegenzug der Verarbeitungsschritt freigegeben wird. Die Freigabe erfolgt beispielsweise durch das Ausstellen eines Tickets zur Benutzung der angeforderten Produktionsressource oder des Verarbeitungsschrittes.

Die von einem Verarbeitungsobjekt maximal allokierbaren Produktionsressourcen sind gemäß der vorliegenden Erfindung auf vorteilhafte Weise dynamisch limitiert. Nach jedem Gebot eines jeden Verarbeitungsobjektes in einer Produktionsanlage wird das jeweils zur Verfügung stehende Guthaben angepasst, das heißt reduziert für die Verarbeitungsobjekte, für die eine Verfügbarkeit angezeigt wird und die den Verarbeitungsschritt anfragen, und unverändert belassen für die Verarbeitungsobjekte, deren Gebot nicht ausreichend war. Somit wird in einem dynamischen System ein Sicherheitsmechanismus für die Ressourcenvergabe bereitgestellt. Unberechtigte Zugriffe, wie beispielsweise Denial of Service Angriffe auf Produktionsressourcen, können verhindert werden.

Neben der Ressourcenbeschränkung durch die Zuweisung eines Guthabens je Verarbeitungsobjekt ist zudem durch die Währung, die als Basis für die Preisfindung durch das Auktionsverfahren dient, eine sinnvolle Metrik für die Optimierung des Produktionsprozesses gegeben. Da in dezentralen Systemen eine zentrale Steuerung und Zuweisung, beispielsweise durch ein MES, nicht möglich ist, bietet das vorgestellte Freigabeverfahren mit Ermittlung des Verfügbarkeitsergebnisses im Laufe eines gesamten Fertigungsprozesses ein optimiertes Verfahren, das flexibel auf aktuelle Angebote und Gebote reagieren kann und überdies die Sicherheit bei Angriffen auf einzelne Werkstücke oder deren digitalen Zwilling erhöht. Insbesondere in vernetzten Automatisierungsanlagen sind Daten eines digitalen Zwillings eines Werkstückes oder eines Endproduktes schwer zu schützen. Da gemäß dem Gegenstand der vorliegenden Anmeldung die schützenswerten Daten in Hinblick auf einen Produktionsablauf, einschließlich einer Information zur Allokation von Ressourcen zu Werkstücken oder zur Freigabe von Verarbeitungsschritten, nicht auf dem digitalen Zwilling vorliegen müssen, wird die Sicherheit erhöht.

Gemäß einer Ausgestaltung wird zur Freigabe des Verarbeitungsschrittes eine Freigabebescheinigung ausgestellt und die Freigabebescheinigung ist durch das Verarbeitungsobjekt in einem vorgebbaren Zeitraum, insbesondere zu einem späteren Zeitpunkt als dem der Verarbeitungsschrittanfrage, einlösbar.

Insbesondere kann ein Verarbeitungsobjekt zunächst Gebote für alle für einen Produktionsschritt benötigten Verarbeitungsschritte abgeben und zunächst für alle Gebote die Freigabebescheinigung abwarten, bevor die einzelnen Services oder Dienste oder Schritte in Anspruch genommen werden. Die Freigabebescheinigung ist insbesondere ein Ticket, welches einen Datensatz umfasst, der angibt, welcher Verarbeitungsschritt freigegeben ist. Die Freigabebescheinigung wird dann durch das Verarbeitungsobjekt beispielsweise bei der Produktionseinheit eingereicht, das heißt beispielsweise über die Funkschnittstelle gesendet. Für das Verarbeitungsobjekt kann somit auf vorteilhafte Weise im Voraus die Verfügbarkeit der benötigten Ressourcen überprüft werden.

In einer Variante erfolgt das Einlösen der Freigabebescheinigung direkt mit der Verarbeitungsschrittanfrage oder direkt mit der Anfrage mit dem Gebot. Der Verarbeitungsschritt wird somit durch das Werkstück quasi ohne weitere Bedingungen angefragt. Im Falle, dass die Auktion erfolgreich ist, erfolgt das Durchführen des Verarbeitungsschrittes automatisch und ohne weitere Kommunikation zwischen den Einheiten. Die Freigabe wird dann von der Auktionsplattform erteilt und das Durchführen des Verarbeitungsschrittes direkt durch die Produktionseinheit ermöglicht.

Gemäß einer Ausgestaltung beschränkt das dem Verarbeitungsobjekt zugewiesene Guthaben die Anfrage mit dem Gebot, indem der Teilbetrag gleich oder niedriger als der Betrag des dem Verarbeitungsobjekt zugewiesenen Guthabens ist. Pro Gebot kann somit nur auf das dem Verarbeitungsobjekt zugewiesene Guthaben zugegriffen werden. Insbesondere ist für das erste Gebot der gesamte Betrag des Guthabens einsetzbar.

Gemäß einer Ausgestaltung wird das dem Verarbeitungsobjekt zugewiesene Guthaben bei einer Freigabe um das Gebot reduziert und eine weitere Anfrage mit einem weiteren Gebot wird durch das reduzierte, dem Verarbeitungsobjekt aktuell zugewiesene Guthaben beschränkt. Das für ein Gebot verfügbare Guthaben wird somit sukzessive kleiner, bis es vollständig aufgebraucht ist.

Gemäß einer Ausgestaltung bewirkt das Freigeben und die Reduktion des Guthabens eine Änderung eines Speicherinhaltes eines Speichers des Verarbeitungsobjektes. Beispielsweise ändert sich der Status im digitalen Zwilling oder die Information über das aktuelle Guthaben im einem Transponder oder RFID-Tag. Beispielsweise ist auf dem Speicher das aktuell zugewiesene Guthaben gespeichert, welches sich im Laufe eines Fertigungsprozesses ändert, nämlich reduziert.

Gemäß einer Ausgestaltung wird das Guthaben durch ein Produktionsleitsystem zugewiesen. Ein Produktionsleitsystem ist insbesondere ein MES. Es wird lediglich das Guthaben des Verarbeitungsobjektes zentral und im Voraus geplant. Insbesondere wird einem jeden Verarbeitungsobjekt innerhalb einer Produktionsanlage das Guthaben durch das Produktionsleitsystem zugewiesen. Somit können durch das Produktionsleitsystem Prioritäten vergeben werden. Das Guthaben ist auf vorteilhafte Weise durch das Werkstück nicht mehr veränderbar. Es kann beispielsweise ein Speicher vorgesehen sein, welcher ein Abspeichern eines höheren Wertes für das Restguthaben nach einer Verarbeitungsschrittanfrage im Vergleich zu dem Wert vor der Anfrage verhindert, beispielsweise ein monotoner Zähler.

Gemäß einer Ausgestaltung werden durch die Freigabe des Verarbeitungsschrittes mehrere Teilverarbeitungsschritte freigegeben. Beispielsweise kann eine Anfrage oder ein Gebot zugleich mehrere Teilschritte in einem Fertigungsprozess umfassen. Insbesondere für Vorgänge innerhalb eines Herstellungsverfahrens, welche zeitlich nah aufeinanderfolgen sollen, beispielsweise aufgrund von für einen Schritt benötigten Umgebungsbedingungen, soll eine Freigabe nur im Block möglich sein.

Gemäß einer Ausgestaltung erfolgen die Freigabe sowie das Ausstellen der Freigabebescheinigung autonom durch eine Steuerungseinheit oder eine Steuerungseinheit und die Produktionseinheit. Das Verfügbarkeitsergebnis wird auf vorteilhafte Weise direkt von einer Steuerungseinheit verarbeitet, d.h. es wird beispielsweise das Verfügbarkeitsergebnis in Form von einer Nachricht an Komponenten der Produktionsanlage gesendet. Direkt auf Grundlage des Verfügbarkeitsergebnisses erfolgt autonom und insbesondere ohne menschliches Einwirken in das Verfahren die Freigabe. Die Freigabe kann ebenso direkt durch die Steuerungseinheit erfolgen oder durch eine Produktionseinheit, welcher das Verfügbarkeitsergebnis vorliegt.

Gemäß einer Ausgestaltung wird die Freigabebescheinigung kryptographisch gesichert ausgestellt. Es besteht ein Interesse, die Authentizität der Freigabebescheinigung sicherzustellen, damit die Produktionseinheit eine Manipulation des Werkstückes ausschließen kann. Beispielsweise wird die Freigabebescheinigung durch ein kryptografisches Verfahren abgesichert, wie beispielsweise ein digitales Signaturverfahren.

Gemäß einer Ausgestaltung wird die Anfrage mittels einer Schnittstelle des Verarbeitungsobjektes zu einer Steuerungseinheit und/oder der Produktionseinheit gesendet, insbesondere mittels einer Funkschnittstelle.

Die Erfindung betrifft ferner ein Computerprogrammprodukt mit einem Computerprogramm, das Mittel zur Durchführung des Verfahrens nach einer der oben genannten Ausgestaltungen aufweist, wenn das Computerprogramm auf einer programmgesteuerten Einrichtung zur Ausführung gebracht wird. Ein Computerprogrammprodukt, wie beispielsweise ein Computerprogrammmittel, kann beispielsweise als Speichermedium, wie beispielsweise Speicherkarte, USB-Stick, CD-ROM, DVD, oder auch in Form einer herunterladbaren Datei von einem Server in einem Netzwerk bereitgestellt oder geliefert werden. Dies kann z.B. in einem drahtlosen Kommunikationsnetzwerk durch die Übertragung einer entsprechenden Datei mit dem Computerprogrammprodukt oder dem Computerprogrammmittel erfolgen. Als programmgesteuerte Einrichtung kommt insbesondere eine Steuereinrichtung, wie beispielsweise ein Mikroprozessor für eine Smartcard oder dergleichen in Frage.

Die Erfindung betrifft ferner eine Anordnung zur Freigabe eines Verarbeitungsschrittes für ein Verarbeitungsobjekt, aufweisend:
- eine Steuereinheit zum Ermitteln eines Verfügbarkeitsergebnisses, wobei das Verfügbarkeitsergebnis anhand einer Anfrage des Verarbeitungsobjektes mit einem Gebot für den Verarbeitungsschritt, anhand von weiteren Anfragen weiterer Verarbeitungsobjekte für den Verarbeitungsschritt und von zu den weiteren Anfragen gehörigen weiteren Geboten und anhand eines Angebotes einer Produktionseinheit zur Durchführung des Verarbeitungsschrittes ermittelbar ist, wobei das Gebot einen Teilbetrag des dem Verarbeitungsobjekt zugewiesenen Guthabens darstellt;
- Freigabeeinheit mit einer Schnittstelle zu dem Verarbeitungsobjekt zum Freigeben des Verarbeitungsschrittes bei einer Verarbeitungsschrittanfrage des Verarbeitungsobjektes gegen Reduktion des Guthabens um das Gebot, falls das Verfügbarkeitsergebnis eine Verfügbarkeit anzeigt.

Gemäß einer Ausgestaltung ist die Freigabeeinheit in die Steuereinheit integriert oder extern als Bestandteil der Produktionseinheit vorgesehen. Es kann beispielsweise eine zentrale Steuereinheit vorgesehen sein, welche sowohl für die Zuweisung des Guthabens, als auch für den Empfang der Gebote und Angebote und die Ermittlung des Verfügbarkeitsergebnisses zuständig ist, sowie außerdem für das Ausgeben der Freigabebescheinigung. In diesem Szenario kommuniziert das Verarbeitungsobjekt direkt mit der zentralen Steuereinheit. Alternativ ist in einer dezentralen Lösung die Freigabeeinheit als Bestandteil einer Produktionseinheit einer Produktionsanlage vorgesehen. Die Steuereinheit wird dann beispielsweise durch eine beliebige der Komponenten der Produktionsanlage übernommen. Dieser Komponente vertrauen dann die anderen Komponenten. Ebenso kann die Steuereinheit als ein Prozessor ausgebildet sein, welcher in einer Cloud vorgesehen ist. In einem solchen Szenario kommuniziert ein Werkstück mit einem Cloud-Server und der Cloud-Server ermittelt das Verfügbarkeitsergebnis. Beispielsweise kommuniziert der Cloud-Server überdies mit den Produktionseinheiten, welche bei einer Verarbeitungsschrittanfrage eines Verarbeitungsobjektes auf Grundlage des Verfügbarkeitsergebnisses die Freigabebescheinigung ausstellen.

Gemäß einer Weiterbildung ist die Steuereinheit Bestandteil eines Cloud-Systems oder eines dedizierten Systems oder wird durch einen Kopfrechner oder durch einen von mehreren Produktionseinheiten einer Produktionsanlage gebildet.

Die Erfindung wird nachfolgend anhand von Ausführungsbeispielen mit Hilfe der Figuren näher erläutert. Es zeigen:
- Figur 1: ein Ablaufdiagramm zur schematischen Darstellung eines Verfahrens zur Freigabe eines Verarbeitungsschrittes gemäß einem ersten Ausführungsbeispiel der Erfindung;
- Figur 2: eine schematische Darstellung eines Prozesses anhand eines Produktionsprozessgraphs zur Veranschaulichung eines Auktionsverfahrens gemäß einem zweiten Ausführungsbeispiels der Erfindung.

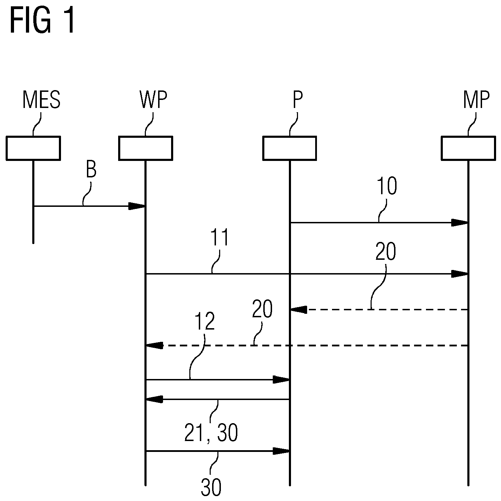

In Figur 1 ist gezeigt, wie einem Verarbeitungsobjekt WP durch eine Produktionseinheit P ein Verarbeitungsschritt freigegeben wird. Dazu sendet das Werkstück WP eine Anfrage 11 an einen Marktplatz MP. Bei dem Marktplatz MP handelt es sich um eine Auktionsplattform, welche Anfragen mit Geboten verschiedener Werkstücke innerhalb einer Produktionsanlage oder Fertigungsanlage empfängt und sowohl untereinander als auch mit einem Angebot 10 der Produktionseinheit P abgleicht. Die Berechnungen, die für die Funktionalität des Marktplatzes MP nötig sind, werden durch einen Prozessor durchgeführt.

Beispielsweise ist eine Fertigungsstraße vorgesehen, welche das Werkstück WP durchläuft, beispielsweise zu Veredelungszwecken. Dafür muss das Werkstück WP bei verschiedenen Produktionseinheiten nach Verarbeitungsschritten anfragen, insbesondere bei der Produktionseinheit P. Von einem Manufacturing Execution System MES erhält das Werkstück WP dafür ein Guthaben oder Budget B.

Insbesondere ist ein Produktionsablauf in Hinblick auf die zu durchlaufenden Schritte durch das MES für das Werkstück WP zentral vorgeplant. Das MES übermittelt dem Werkstück WP die vorgesehenen Produktionsschritte. Eine Konfiguration der Produktionseinheiten und insbesondere der Produktionseinheit P ist durch das MES allerdings nicht vorgesehen. Insbesondere sieht der Plan keine Zeitfenster vor, die den einzelnen Werkstücken für einzelne Schritte zugeordnet sind. Stattdessen soll in einem werkstückzentrierten Produktionssystem die Verfügbarkeit von Produktionsschritten für ein Werkstück dezentral zwischen den Fertigungskomponenten ausgehandelt werden. Durch das MES wird lediglich ein Gesamtbudget oder -guthaben B vorgegeben, mit welchem das Werkstück WP für seine gesamte Produktion innerhalb der Produktionsanlage oder für einen Teilschritt der Produktion auskommen muss. Der Fertigungsplan und das zugewiesene Guthaben B sind entweder auf dem Werkstück WP, d.h. einem auf dem Werkstück WP befindlichen Speicher, abgelegt oder das Werkstück ruft diese Info selbst von einem Cloud-Service oder von einem zentralen Steuerungsrechner ab.

Das Auktionsverfahren und Ermitteln eines Verfügbarkeitsergebnisses 20 wird durch den Prozessor ausgeführt. Der Prozessor kann dabei auf Cloud-Services zugreifen, beispielsweise zum Abrufen oder Speichern von Anfragen der Werkstücke, Angeboten der Produktionseinheiten oder von Verfügbarkeitsergebnissen für verschiedene Werkstücke oder von verschiedenen, zeitlich aufeinanderfolgenden Anfragen eines Werkstücks.

Der Prozessor kann Bestandteil einer speicherprogrammierbaren Steuerung sein, welche in der Produktionsanlage zur Steuerung oder Regelung einer oder mehrerer Produktionseinheiten vorgesehen ist. Da der Prozessor die Funktionalität der Auktionsplattform durchführt, ist es notwendige Voraussetzung, dass alle beteiligten Produktionseinheiten und Werkstücke dem Prozessor vertrauen können. In einem Szenario, in welchem der Marktplatz MP durch eine der Produktionseinheiten in der Produktionsanlage gebildet wird, ist eine Manipulationssicherung der Produktionseinheit mit Marktplatzfunktionalität in besonderer Weise sicherzustellen.

Die Bezahlung des angefragten Services oder Produktionsschrittes durch das Werkstück WP erfolgt nach einem erfolgreichen Gebot, also sofern das Verfügbarkeitsergebnis 20 eine Verfügbarkeit anzeigt. Beispielsweise enthält eine Nachricht mit Datensatz von der Produktionseinheit P an das Werkstück WP einen Flag, der das "OK" des Marktplatzes signalisiert. Andernfalls signalisiert der Flag, dass ein Gebot zu niedrig war oder ein Angebot einer Produktionsanlage nicht verfügbar und somit eine Auktion nicht erfolgreich. Alternativ kann diese Nachricht entfallen, so dass ein nicht-Erhalten eines Verfügbarkeitsergebnisses die gescheiterte Auktion anzeigt. Die Bezahlung erfolgt durch das Senden einer Verarbeitungsschrittanfrage 12 an die Produktionseinheit P. Das Guthaben B des Werkstückes WP wird nun reduziert und der entsprechende Speichereintrag auf dem Werkstückspeicher, Cloud-Server oder Steuerrechner aktualisiert. Im Gegenzug erhält das Werkstück WP eine Freigabebescheinigung 30 oder ein Ticket für die Inanspruchnahme der Leistung der Produktionseinheit P, welche das Werkstück WP bei Inanspruchnahme an die Produktionseinheit P übermittelt.

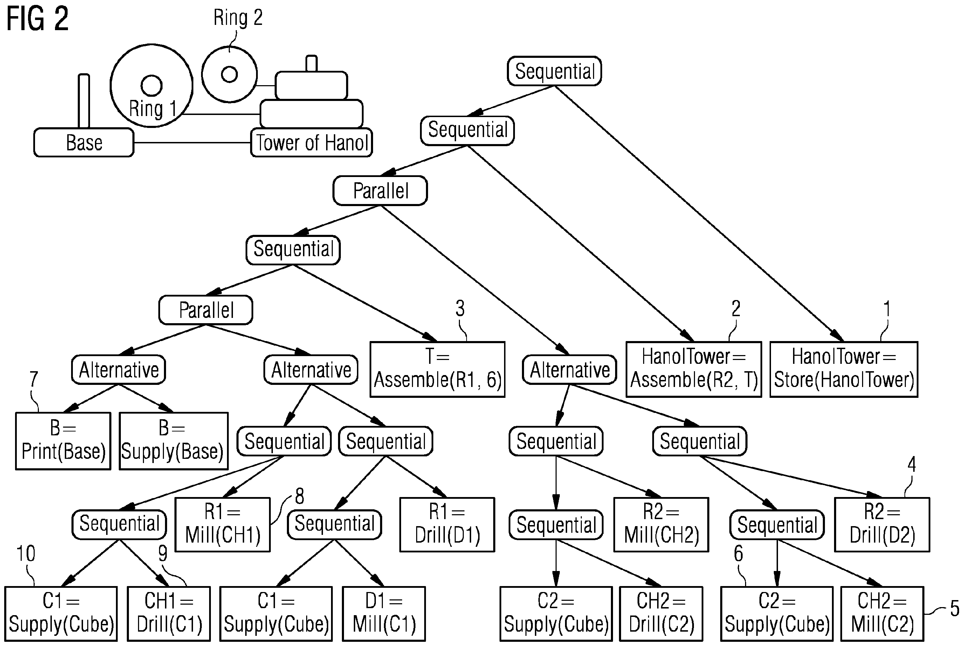

Figur 2 veranschaulicht die Herstellung eines Produktes "Tower of Hanoi", bestehend aus Base, Ring 1 und Ring 2, anhand eines Produktionsprozessgraphen oder Production Process Graph. Der Graph veranschaulicht abzuarbeitende Verarbeitungsschritte, welche entweder aufeinanderfolgend, parallel oder alternativ zueinander durchgeführt werden. Beispielsweise ist am Wurzelknoten und damit für den gesamten Herstellungsprozess ein Budget von 30 vorgegeben. Es kann sich bei dem Betrag 30 um einen Betrag in einer beliebigen festgelegten Währung handeln. Lediglich innerhalb einer Produktionsanlage sollte auf eine einheitliche Währung geachtet werden.

Andernfalls ist eine korrekte Durchführung der Auktion nicht gewährleistet. Die Verwaltung des Guthabens je Verarbeitungsobjekt erfolgt durch ein zentrales Konto.

In einer ersten Auktion ergibt sich für die Operation "*Store Hanoi Tower*" 1 ein Preis von 1. Beispielsweise war das erste Gebot für den Verarbeitungsschritt "*Store Hanoi Tower*" 1 direkt der Wert 1 oder eine erste Anfrage enthielt ein niedrigeres Gebot, welches nicht für das Ausstellen einer Freigabebescheinigung ausreichte, und eine zweite Anfrage wurde mit dem höheren Wert 1 gesendet und war erfolgreich. Das verbleibende Budget von 29 kann maximal in der nächsten Auktion eingesetzt werden. Für den darauffolgenden Schritt "*Assemble(R2, T)"* 2 ergibt sich in der Auktion ein Preis von 3. Die nachfolgende Tabelle listet weitere Gebote, welche zu einer Freigabebescheinigung der dazugehörigen Verarbeitungsschritte 3-10 führen.

| | | |
|---|---|---|
| *T* | *= Assemble (R1,B)* | *:2* |
| *R2* | *= Drill (D2)* | *:1* |
| *D2* | *= Mill (C2)* | *:2* |
| *C2* | *= Supply (Cube)* | *:4* |
| *B* | *= Print (Base)* | *:7* |
| *R1* | *= Mill (CH1)* | *:2* |
| *CH1* | *= Drill (C1)* | *:1* |
| *C1* | *= Supply (Cube)* | *:5* |
| *Verbleibendes Budget* | | *:2* |

Es bleibt beispielsweise ein Restguthaben übrig, nachdem alle Schritte zum Produzieren des Tower auf Hanoi durchgeführt wurden. Für jeden Schritt, wie das Bohren oder Fräsen einzelner Komponenten des "Tower of Hanoi", wird einzeln ein Gebot abgegeben. Da das Guthaben des Endproduktes "Tower of Hanoi" begrenzt ist, kann nur eine begrenzte Menge von Produktionsdiensten allokiert werden. In einer werkstückzentrierten Produktionssteuerung beschränkt dies die Möglichkeiten eines Angreifers, der in der Lage ist, das Werkstück bzw. sein virtuelles Abbild oder einzelne Komponenten des Endproduktes zu manipulieren. Insbesondere ein Angriff auf ein virtuelles Abbild ist in Szenarien, in welchen das virtuelle Abbild oder ein sogenannter digitaler Zwilling über ein IT Kommunikationsnetzwerk zugänglich ist, relativ leicht möglich. Die Manipulation über eine Abänderung eines Produktionsablaufes, der auf dem digitalen Zwilling gespeichert ist, ist bei einem Guthaben mit fest vorgegebener Obergrenze zwar gegebenenfalls möglich, verhindert aber beispielsweise einen Denial of Service Angriff auf Produktionsressourcen innerhalb einer Produktionsanlage.

Überdies stellt die Währung die Basis für die Preisfindung durch das Auktionsverfahren dar und liefert neben der als Sicherheitsmechanismus dienenden Ressourcenbeschränkung überdies eine sinnvolle Metrik für die Optimierung des Produktionsprozesses. Insbesondere wird die Reihenfolge, in der verschiedene Werkstücke einen Service in Anspruch nehmen können, aufeinander abgestimmt und in Hinblick auf Wartezeiten oder Auslastung der Maschinen optimiert.

Obwohl die Erfindung im Detail durch die Ausführungsbeispiele näher illustriert und beschrieben wurde, ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Verfahren zur Freigabe eines Verarbeitungsschrittes für ein Verarbeitungsobjekt mit zugewiesenem Guthaben (B), aufweisend die folgenden Schritte:
- Ermitteln eines Verfügbarkeitsergebnisses (20) mittels eines Prozessors, wobei das Verfügbarkeitsergebnis anhand einer Anfrage (11) des Verarbeitungsobjektes mit einem Gebot für den Verarbeitungsschritt, anhand von weiteren Anfragen weiterer Verarbeitungsobjekte für den Verarbeitungsschritt und von zu den weiteren Anfragen gehörigen weiteren Geboten und anhand eines Angebotes (10) einer Produktionseinheit geeignet zur Durchführung des Verarbeitungsschrittes ermittelt wird, wobei das Gebot einen Teilbetrag des dem Verarbeitungsobjekt zugewiesenen Guthabens (B) darstellt;
- Freigeben (21) des Verarbeitungsschrittes bei einer Verarbeitungsschrittanfrage (12) des Verarbeitungsobjektes gegen Reduktion des Guthabens (B) um das Gebot, falls das Verfügbarkeitsergebnis eine Verfügbarkeit anzeigt.

2. Verfahren nach Anspruch 1, wobei zum Freigeben (21) des Verarbeitungsschrittes eine Freigabebescheinigung (30) ausgestellt wird und die Freigabebescheinigung (30) durch das Verarbeitungsobjekt in einem vorgebbaren Zeitraum, insbesondere zu einem späteren Zeitpunkt als dem der Verarbeitungsschrittanfrage (12), einlösbar ist.

3. Verfahren nach Anspruch 1 oder 2, wobei das dem Verarbeitungsobjekt zugewiesene Guthaben (B) die Anfrage mit dem Gebot beschränkt, indem der Teilbetrag gleich oder niedriger als der Betrag des dem Verarbeitungsobjekt zugewiesenen Guthabens (B) ist.

4. Verfahren nach einem der vorstehenden Ansprüche, wobei das dem Verarbeitungsobjekt zugewiesene Guthaben (B) bei einer Freigabe um das Gebot reduziert wird und eine weitere Anfrage mit einem weiteren Gebot durch das reduzierte, dem Verarbeitungsobjekt aktuell zugewiesene Guthaben beschränkt wird.

5. Verfahren nach einem der vorstehenden Ansprüche, wobei das Freigeben (21) und die Reduktion des Guthabens (B) eine Änderung eines Speicherinhaltes eines Speichers des Verarbeitungsobjektes bewirkt.

6. Verfahren nach einem der vorstehenden Ansprüche, wobei das Guthaben (B) durch das Verarbeitungsobjekt unveränderbar auf dem Verarbeitungsobjekt gespeichert ist.

7. Verfahren nach einem der vorstehenden Ansprüche, wobei das Guthaben (B) durch ein Produktionsleitsystem zugewiesen (40) wird.

8. Verfahren nach einem der vorstehenden Ansprüche, wobei durch die Freigabe des Verarbeitungsschrittes mehrere Teilverarbeitungsschritte freigegeben werden.

9. Verfahren nach einem der vorstehenden Ansprüche, wobei die Freigabe sowie das Ausstellen der Freigabebescheinigung autonom durch eine Steuerungseinheit oder eine Steuerungseinheit und die Produktionseinheit erfolgen.

10. Verfahren nach einem der vorstehenden Ansprüche, wobei die Freigabebescheinigung kryptographisch gesichert ausgestellt wird.

11. Verfahren nach einem der vorstehenden Ansprüche, wobei die Anfrage mittels einer Schnittstelle des Verarbeitungsobjektes zu einer Steuerungseinheit und/ oder der Produktionseinheit gesendet wird, insbesondere mittels einer Funkschnittstelle.

12. Computerprogrammprodukt mit einem Computerprogramm, das Mittel zur Durchführung des Verfahrens nach einem der Ansprüche 1 bis 11 aufweist, wenn das Computerprogramm auf einer programmgesteuerten Einrichtung zur Ausführung gebracht wird.

13. Anordnung zur Freigabe eines Verarbeitungsschrittes für ein Verarbeitungsobjekt (WP), aufweisend:
- eine Steuereinheit zum Ermitteln eines Verfügbarkeitsergebnisses, wobei das Verfügbarkeitsergebnis anhand einer Anfrage des Verarbeitungsobjektes (WP) mit einem Gebot für den Verarbeitungsschritt, anhand von weiteren Anfragen weiterer Verarbeitungsobjekte für den Verarbeitungsschritt und von zu den weiteren Anfragen gehörigen weiteren Geboten und anhand eines Angebotes einer Produktionseinheit (P) geeignet zur Durchführung des Verarbeitungsschrittes ermittelbar ist, wobei das Gebot einen Teilbetrag des dem Verarbeitungsobjekt (WP) zugewiesenen Guthabens (B) darstellt;
- Freigabeeinheit mit einer Schnittstelle zu dem Verarbeitungsobjekt (WP) zum Freigeben des Verarbeitungsschrittes bei einer Verarbeitungsschrittanfrage des Verarbeitungsobjektes (WP) gegen Reduktion des Guthabens (B) um das Gebot, falls das Verfügbarkeitsergebnis eine Verfügbarkeit anzeigt.

14. Anordnung nach Anspruch 13, wobei die Freigabeeinheit in die Steuereinheit integriert ist oder extern als Bestandteil der Produktionseinheit (P) vorgesehen ist.

15. Anordnung nach Anspruch 13 oder 14, wobei die Steuereinheit Bestandteil eines Cloud-Systems oder eines dedizierten Systems ist oder durch einen Kopfrechner oder durch eine von mehreren Produktionseinheiten einer Produktionsanlage gebildet wird.

## Claims

1. Method for enabling a processing step for an object to be processed with an allocated credit (B), having the following steps of:
- determining an availability result (20) by means of a processor, wherein the availability result is determined on the basis of a request (11) from the object to be processed with a bid for the processing step, on the basis of further requests from further objects to be processed for the processing step and on the basis of further bids associated with the further requests and on the basis of an offer (10) from a production unit suitable for carrying out the processing step, wherein the bid is a partial amount of the credit (B) allocated to the object to be processed;
- enabling (21) the processing step in the case of a processing step request (12) from the object to be processed in exchange for a reduction in the credit (B) by the bid if the availability result indicates availability.

2. Method according to Claim 1, wherein an enabling voucher (30) is issued for enabling (21) the processing step, and the enabling voucher (30) can be redeemed by the object to be processed in a predefinable period, in particular at a time later than that of the processing step request (12).

3. Method according to Claim 1 or 2, wherein the credit (B) allocated to the object to be processed restricts the request with the bid by virtue of the partial amount being less than or equal to the amount of the credit (B) allocated to the object to be processed.

4. Method according to one of the preceding claims, wherein the credit (B) allocated to the object to be processed is reduced by the bid in the case of enabling and a further request with a further bid is restricted by the reduced credit currently allocated to the object to be processed.

5. Method according to one of the preceding claims, wherein the enabling (21) and the reduction of the credit (B) change memory contents of a memory of the object to be processed.

6. Method according to one of the preceding claims, wherein the credit (B) is unalterably stored in the object to be processed by the object to be processed.

7. Method according to one of the preceding claims, wherein the credit (B) is allocated (40) by a production control system.

8. Method according to one of the preceding claims, wherein a plurality of partial processing steps are enabled by enabling the processing step.

9. Method according to one of the preceding claims, wherein the enabling and the issuing of the enabling voucher are carried out autonomously by a control unit or by a control unit and the production unit.

10. Method according to one of the preceding claims, wherein the enabling voucher is issued in a cryptographically secured manner.

11. Method according to one of the preceding claims, wherein the request is transmitted to a control unit and/or to the production unit by means of an interface of the object to be processed, in particular by means of a radio interface.

12. Computer program product having a computer program which has means for carrying out the method according to one of Claims 1 to 11 when the computer program is executed on a program-controlled device.

13. Arrangement for enabling a processing step for an object (WP) to be processed, having:
- a control unit for determining an availability result, wherein the availability result can be determined on the basis of a request from the object (WP) to be processed with a bid for the processing step, on the basis of further requests from further objects to be processed for the processing step and on the basis of further bids associated with the further requests and on the basis of an offer from a production unit (P) suitable for carrying out the processing step, wherein the bid is a partial amount of the credit (B) allocated to the object (WP) to be processed;
- an enabling unit having an interface to the object (WP) to be processed for enabling the processing step in the case of a processing step request from the object (WP) to be processed in exchange for a reduction in the credit (B) by the bid if the availability result indicates availability.

14. Arrangement according to Claim 13, wherein the enabling unit is integrated in the control unit or is externally provided as part of the production unit (P).

15. Arrangement according to Claim 13 or 14, wherein the control unit is part of a cloud system or a dedicated system or is formed by a head computer or by one of a plurality of production units of a production installation.

## Revendications

1. Procédé de validation d'une étape de traitement pour un objet à traiter possédant un crédit attribué (B), comprenant les étapes suivantes :
- détermination d'un résultat de disponibilité (20) au moyen d'un processeur, dans lequel le résultat de disponibilité est déterminé sur la base d'une demande (11) émise par l'objet à traiter avec une offre pour l'étape de traitement, en se basant sur d'autres demandes d'autres objets à traiter pour l'étape de traitement et sur d'autres offres correspondant aux autres demandes et en fonction d'une soumission (10) d'une unité de production adaptée pour exécuter l'étape de traitement, dans lequel l'offre représente un montant partiel du crédit (B) attribué à l'objet à traiter,
- validation (21) de l'étape de fabrication lors d'une demande d'étape de fabrication (12) par l'objet à traiter contre une réduction du crédit (B) d'un montant correspondant à l'offre dans le cas où le résultat de disponibilité indique une disponibilité.

2. Procédé selon la revendication 1, dans lequel, pour valider (21) l'étape de traitement, un certificat de validation (30) est délivré et le certificat de validation (30) est payable par l'objet à traiter dans un délai prescrit, notamment à un moment ultérieur à la demande d'étape de fabrication (12).

3. Procédé selon la revendication 1 ou 2, dans lequel le crédit (B) attribué à l'objet à traiter limite la demande faite avec une offre, à savoir que le montant partiel est égal ou inférieur au montant du crédit attribué (B) à l'objet à traiter.

4. Procédé selon l'une des revendications précédentes, dans lequel, en cas de validation, le crédit (B) attribué à l'objet de fabrication est réduit d'un montant égal à l'offre et une demande ultérieure avec une autre offre est limitée au crédit réduit attribué à ce moment à l'objet à traiter.

5. Procédé selon l'une des revendications précédentes, dans lequel la validation (21) et la réduction du crédit (B) engendrent une modification du contenu d'une mémoire de l'objet à traiter.

6. Procédé selon l'une des revendications précédentes, dans lequel le crédit (B) est enregistré par l'objet à traiter de façon non modifiable sur l'objet à traiter.

7. Procédé selon l'une des revendications précédentes, dans lequel le crédit (B) est attribué (40) par un système de gestion de fabrication.

8. Procédé selon l'une des revendications précédentes, dans lequel plusieurs étapes de fabrication partielles sont validées par la validation de l'étape de fabrication.

9. Procédé selon l'une des revendications précédentes, dans lequel la validation et la délivrance du certificat de validation s'effectuent de façon autonome par une unité de commande ou une unité de commande et l'unité de production.

10. Procédé selon l'une des revendications précédentes, dans lequel le certificat de validation est délivré de façon protégée par cryptographie.

11. Procédé selon l'une des revendications précédentes, dans lequel la demande est envoyée au moyen d'une interface de l'objet à traiter à une unité de commande et/ou à l'unité de production, notamment au moyen d'une interface radio.

12. Produit de programme informatique comportant un programme informatique qui comprend des moyens pour exécuter le procédé selon l'une des revendications 1 à 11 lorsque le programme informatique est exécuté sur un dispositif à commande programmée.

13. Agencement de validation d'une étape de traitement pour un objet à traiter (WP) comprenant :
- une unité de commande permettant de déterminer un résultat de disponibilité, dans lequel le résultat de disponibilité est déterminé sur la base d'une demande de l'objet à traiter (WP) avec une offre pour l'étape de traitement, en se basant sur d'autres demandes d'autres objets à traiter pour l'étape de traitement et sur d'autres offres afférentes aux autres demandes et en fonction d'une soumission (10) d'une unité de production (P) adaptée pour exécuter l'étape de traitement, dans lequel l'offre représente un montant partiel du crédit (B) attribué à l'objet à traiter, et
- une unité de validation comportant une interface avec l'objet à traiter (WP) et permettant de valider l'étape de fabrication lors d'une demande d'étape de fabrication par l'objet à traiter (WP) contre une réduction du crédit (B) d'un montant correspondant à l'offre dans le cas où le résultat de disponibilité indique une disponibilité.

14. Agencement selon la revendication 13, dans lequel l'unité de validation est intégrée dans l'unité de commande ou est disposée à l'extérieur en tant que composante de l'unité de production (P).

15. Agencement selon la revendication 13 ou 14, dans lequel l'unité de commande est une partie intégrante d'un système de nuage informatique ou d'un système dédié ou est formée par un calculateur ou par une de plusieurs unités de production d'une installation de production.
